# EUROPÄISCHE PATENTSCHRIFT

(11) **EP 2 436 934 B1**
(45) Veröffentlichungstag und Bekanntmachung des Hinweises auf die Patenterteilung: **12.11.2014**
(21) Anmeldenummer: 11401591.0
(22) Anmeldetag: 14.09.2011
(51) Int. Cl.: F16B 13/12, F16B 13/08

(54) **Dübel**
Dowel
Cheville

(30) Priorität: 01.10.2010 DE 102010037910
(43) Veröffentlichungstag der Anmeldung: 04.04.2012
(73) Patentinhaber: fischerwerke GmbH & Co. KG, 72178 Waldachtal (DE)
(72) Erfinder: Nehl, Wolfgang, 72178 Waldachtal (DE)

(56) Entgegenhaltungen:
- EP-A1- 0 002 654
- EP-A1- 0 200 676
- DE-A1- 1 750 110
- DE-A1-102008 061 950
- GB-A- 1 218 095
- US-A- 2 918 840
- US-A- 5 464 311
- US-A1- 2001 046 429

## Beschreibung

Die Erfindung betrifft einen Dübel mit den Merkmalen des Oberbegriffs des Anspruchs 1.

Dübel aus Kunststoff, die einen Spreizbereich aufweisen, der durch ein Spreizelement aufspreizbar ist, sind allgemein bekannt. Es ist ebenso bekannt, Dübel an ihrem in Eintreibrichtung vorderen Ende durch eine Hülse aus einem harten Material, insbesondere aus Metall, zu verstärken, um den Halt einer als Spreizelement verwendete Schraube im Dübel zu verbessern. Beispielsweise zeigen das Gebrauchsmuster DE 297 04 666 U1 und die Offenlegungsschrift DE 27 48 881 A1 derartige Dübel.

Das Dokument DE 10 2008 061 950 A zeigt einen weiteren Dübel nach dem Stand der Technik.

Aus der europäischen Patentschrift EP 1 194 698 B1 ist eine Weiterentwicklung dieser Dübel bekannt. Statt einer in sich starren Hülse ist an dem Dübel ein schwenkbares Einschraubelement in Form eines gebogenen und in sich biegbaren Blechstreifens angeordnet. Der in der europäischen Patentschrift dargestellte Dübel besteht aus einem entlang seiner Längsachse gestreckten hülsenförmigen Dübelschaft aus Kunststoff. Der Dübelschaft weist eine vordere und eine hintere ringförmige Hülse auf, zwischen denen sich ein Spreizbereich befindet. Der Spreizbereich ist bei diesem Dübel durch Längsschlitze in Spreizschenkel unterteilt und mittels eines Spreizelements, insbesondere mittels einer Schraube, spreizbar. Zur Verstärkung des Dübels ist am Dübelschaft das Einschraubelement angeordnet, das eine Durchgangsöffnung aufweist, durch die das Spreizelement einführbar ist, derart, dass das Spreizelement in das Einschraubelement eingreift und eine formschlüssige Verbindung herstellt. In einer Ausgangsstellung ist die Durchgangsöffnung zur Längsachse des Dübels geneigt, wodurch die in Richtung der Längsachse des Dübels projizierte Fläche der Durchgangsöffnung kleiner ist, als wenn die Längsachse eine Normale zur Fläche der Durchgangsöffnung bildet. Aufgrund der Schwenkbarkeit des Einschraubelements kann das Einschraubelement beim Einführen eines Spreizelements von der Ausgangsstellung um eine im wesentlichen orthogonal zur Längsachse des Dübels stehende Schwenkachse in eine ausgeschwenkte Haltestellung verschwenkt werden, so dass sich in Abhängigkeit von der Schrägstellung die in Längsrichtung projizierte Fläche der Durchgangsöffnung vergrößert. Hierdurch wird erreicht, dass Schrauben unterschiedlichster Durchmesser in die Durchgangsöffnung des Einschraubelements eingeführt werden können und im Einschraubelement sicher gehalten werden.

Ausgehend von dem aus der europäischen Patentschrift EP 1 194 698 B1 bekannten Dübel ist es die Aufgabe der vorliegenden Erfindung, den Halt des Dübels im Bohrloch zu verbessern.

Diese Aufgabe wird erfindungsgemäß durch einen Dübel mit den Merkmalen des Anspruchs 1 gelöst. Kennzeichnend für den erfindungsgemäßen Dübel ist, dass am Einschraubelement mindestens ein Halteelement angeordnet ist, derart, dass das Halteelement in der Haltestellung in radialer Richtung über den Dübelschaft übersteht. Um dies zu erreichen, ist der Durchmesser der Durchgangsöffnung des Einschraubelements derart gewählt, dass die in Längsrichtung des Dübels projizierte Fläche der Durchgangsöffnung in der Ausgangsstellung kleiner ist, als die des Teils des Spreizelements, der beim Verspreizen des Dübels in das Einschraubelement eingeführt wird. Somit wird beim Verspreizen des Dübels das Einschraubelement zwangsweise um die Schwenkachse verschwenkt. Das Halteelement wird durch das Verschwenken des Einschraubelements in radialer Richtung über den Dübelschaft hinaus bewegt. Hierdurch wird erreicht, dass nach dem Einführen des Spreizelements in das Einschraubelement, also nach dem Verspreizen des Dübels, das Halteelement zusätzlich zum Spreizbereich gegen die Wand des Bohrlochs gedrückt wird, in das der Dübel eingesetzt ist. Dass das Halteelement in der Haltestellung in radialer Richtung über den Dübelschaft übersteht bedeutet, dass der Durchmesser eines Umkreises, der die projizierte Fläche des Halteelements in der Ausgangsstellung umschreibt, kleiner ist, als ein Umkreis um die projizierte Fläche des Halteelements in der Haltestellung. Der "Durchmesser" wird durch die auf die Längsachse des Dübels bezogene radiale Richtung definiert, die Längsachse bildet die Flächennormale auf die Ebene der Kreisscheibe der Umkreise und geht durch deren Mittelpunkte. Das Halteelement kann beispielsweise als Vorsprung, Nase, Abwinklung oder Haken ausgebildet sein. Mit dem Halteelement können hohe Haltekräfte erzeugt werden, die zusätzlich zu den Haltekräften zwischen der Bohrlochwand und dem Spreizbereich des Dübels wirken. Insbesondere wenn eine Schraube als Spreizelement Verwendung findet, kann der Dübel mittels des Einschraubelements gestaucht beziehungsweise verknotet werden, so dass er auch in Hohlbaustoffen eingesetzt werden kann. Das ausgeschwenkte Halteelement verstärkt dabei den Formschluss zwischen Dübel und Baustoff und erhöht die Haltekräfte des Dübels.

In einer bevorzugten Ausführungsform des erfindungsgemäßen Dübels liegt das Halteelement in der Ausgangsstellung am Dübelschaft an. Insbesondere steht das Halteelement in der Ausgangsstellung im wesentlichen nicht in radialer Richtung über den Dübelschaft über. Der Dübel kann somit ohne größeren Kraftaufwand in ein Bohrloch eingeführt werden, das mit einem Bohrer gebohrt wurde, dessen Nenndurchmesser dem Nenndurchmesser des Dübels entspricht. Das Halteelement behindert das Einführen nicht.

Weiterhin ist bevorzugt, dass das Einschraubelement und das Halteelement aus Metall sind, so dass die beiden Elemente eine ausreichende große Härte und Steifigkeit aufweisen, um große Kräfte zwischen dem Dübel und der Bohrlochwand übertragen zu können. Alternativ kann das Einschraubelement und das Halteelement aus einem geeigneten Kunststoff hergestellt sein, beispielsweise aus einem harten faserverstärkten Kunststoff.

Vorzugsweise ist das Halteelement mit dem Einschraubelement einstückig verbunden. Insbesondere wenn das Einschraubelement mit dem Halteelement als ein Teil einstückig gefertigt wird, ist eine einfache und kostengünstige Herstellung dieser Elemente möglich.

Eine weitere bevorzugte Ausgestaltungsform des erfindungsgemäßen Dübels sieht vor, dass das Einschraubelement ringförmig ausgestaltet ist und den Dübelschaft im wesentlichen umfasst. Diese Anordnung gewährleistet eine einfache Ausgestaltung des Dübels und einen großen Schwenkbereich des Einschraubelements, so dass Spreizelemente unterschiedlichster Durchmesser mit dem erfindungsgemäßen Dübel verwendet werden können.

Es ist ebenfalls bevorzugt, dass das Einschraubelement mit dem daran angeordneten Halteelement symmetrisch aufgebaut ist. Insbesondere ist das Einschraubelement derart gestaltet, dass es in der Ausgangsstellung achsensymmetrisch zur Schwenkachse ist. Eine derartige Ausgestaltung vereinfacht die Montage des Einschraubelements am Dübel.

Die Herstellung des erfindungsgemäßen Dübels kann kostengünstig im Spritzgussverfahren erfolgen. Dabei kann das Einschraubelement und das Halteelement als Einlegeteil in die Spritzgussform eingelegt und umspritzt werden. Wenn das Einschraubelement und das Halteelement aus Kunststoff bestehen, können diese Teile alternativ auch vor oder nach dem Herstellen des Dübelschafts mit einer zweiten Kunststoffkomponente gespritzt werden.

Die Erfindung wird nachfolgend anhand eines in der Zeichnung dargestellten Ausführungsbeispiels näher erläutert.

Es zeigen:
- Figur 1: einen erfindungsgemäßen Dübel in einer perspektivischen Darstellung in einer Ausgangsstellung;
- Figur 2a: eine Seitenansicht des erfindungsgemäßen Dübels in der Ausgangsstellung;
- Figur 2b: eine Seitenansicht des erfindungsgemäßen Dübels in einer Haltestellung;
- Figur 3: eine Draufsicht auf den erfindungsgemäßen Dübel in der Ausgangsstellung; und
- Figur 4: eine perspektivische Darstellung des Einschraubelements des erfindungsgemäßen Dübels.

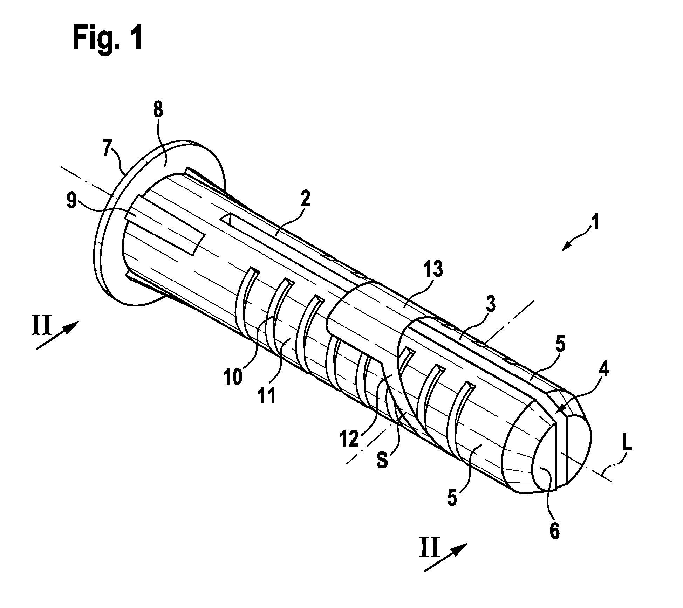

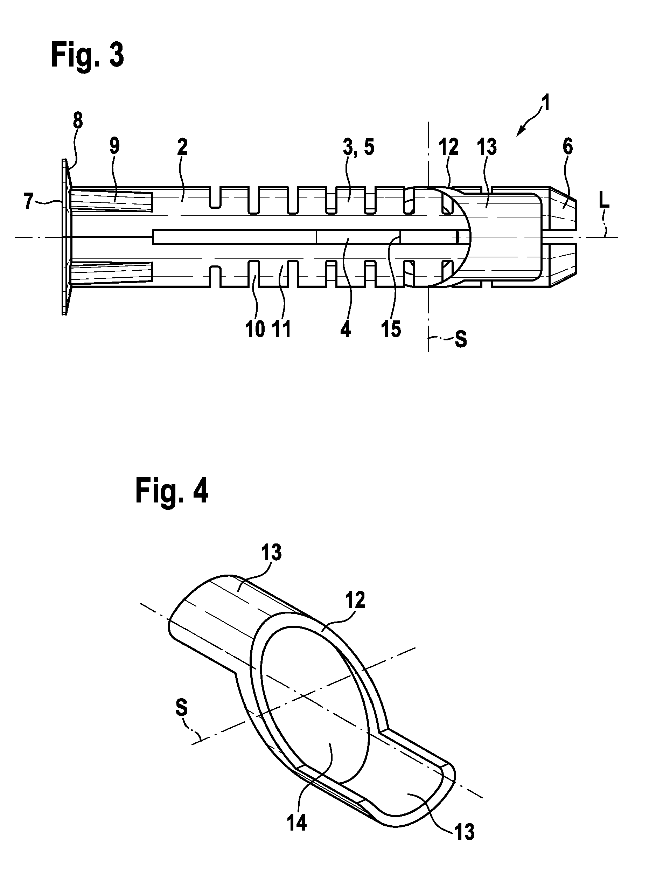

Der in den Figuren 1 bis 3 dargestellte erfindungsgemäße Dübel 1 weist einen entlang seiner Längsachse L gestreckten hülsenförmigen Dübelschaft 2 aus Kunststoff auf. Der Dübelschaft 2 ist als ringförmige Hülse mit einem innenliegenden, in Längsrichtung verlaufenden und im wesentlichen runden Kanal (in den Figuren nicht sichtbar) ausgebildet, der zur Aufnahme eines nicht dargestellten Spreizelements dient. Am Dübelschaft 2 ist ein Spreizbereich 3 angeordnet, mit einer schlitzförmigen Öffnung 4, die den Dübelschaft 2 zu mehr als drei Viertel seiner Länge in zwei Spreizschenkel 5 unterteilt. Die Spreizschenkel 5 sind zur Stabilisierung des Dübels 1 beim Einführen in ein Bohrloch an einigen Stellen durch Verbindungsstege 15 (siehe Figur 3) miteinander verbunden. Der Dübelschaft 2 ist an seinem in Einbringrichtung vorderen Ende 6 kegelstumpfförmig ausgebildet, um das Einbringen des Dübels 1 in ein Bohrloch zu erleichtern. An seinem hinteren Ende 7 weist der Dübel 1 einen umlaufenden Bund 8 auf, der ein zu tiefes Einbringen des Dübels 1 in ein nicht dargestelltes Bohrloch verhindert, sowie keilförmige Verdrehsicherungselemente 9, die ein Verdrehen des Dübels 1 im Bohrloch verhindern, wenn eine Schraube als Spreizelement in den Dübelschaft 2 eingebracht wird. Um die Verbindung zwischen dem Dübel 1 und der Wand eines Bohrlochs zu verbessern, sind an den beiden Spreizschenkeln 5 in Umfangsrichtung verlaufende Nuten 10 angeordnet, die die Oberfläche der Spreizschenkel 5 in Rippen 11 unterteilen. Beim Einbringen der Schraube werden die beiden Spreizschenkel 5 auseinander gedrückt, so dass der Dübel 1 verspreizt.

Um den Halt des Spreizelements im Dübel 1 und den Halt des Dübels 1 in einem Bohrloch zu verbessern, ist am Dübelschaft 2 ein Einschraubelement 12 angeordnet, das um eine orthogonal zur Längsachse L verlaufende Schwenkachse S schwenkbar ist, die durch den Dübelschaft 2 verläuft. Das Einschraubelement 12 ist in Figur 4 gesondert dargestellt. Das Einschraubelement 12 ist ringförmig mit einer Durchgangsöffnung 14, in die ein Spreizelement, insbesondere eine Schraube, einführbar ist. Am Einschraubelement 12 sind zwei Halteelemente 13 angeordnet. Die Halteelemente 13 sind einstückig mit dem Einschraubelement 12 verbunden und als Zylinderschalen ausgebildet, wobei die Wölbung der Zylinderschalen mit dem Durchmesser des Dübelschafts 2 korrespondiert. Das Einschraubelement 12 und die Halteelemente 13 sind als ein Teil aus Metall gefertigt, wobei alternativ auch eine Fertigung aus einem Kunststoff möglich wäre. Das Einschraubelement 12, mit den daran angeordneten Halteelementen 13, ist symmetrisch aufgebaut. Es besteht eine Achssymmetrie bezüglich der Schwenkachse S. Bei der Montage des Dübels 1 ist es daher unerheblich, welches der beiden Halteelemente 13 in Richtung des vorderen Endes 6 beziehungsweise des hinteren Endes 7 des Dübels 1 weist.

Das ringförmige Einschraubelement 12 umfasst den Dübelschaft 2, wobei das Einschraubelement 12 zur Aufnahme eines Spreizelements am Dübelschaft 2 schwenkbar gelagert ist. Das Einschraubelement 12 ist derart am Dübelschaft 2 angeordnet, dass die Längsachse L keine Flächennormale der Ebene E ist, in der die Durchgangsöffnung 14 des Einschraubelements 12 in einer Ausgangsstellung liegt. Somit steht einem Spreizelement, beispielsweise einer Schraube, die in Richtung der Längsachse L in den Dübelschaft 2 eingeführt wird, nicht die ganze Weite der Durchgangsöffnung 14 zum Durchtritt durch das Einschraubelement 12 zur Verfügung, sondern nur die in Richtung der Längsachse L projizierte Fläche. Ist der Durchmesser der Schraube größer als der Durchmesser eines Umkreises, der die in Richtung der Längsachse L projizierte Fläche umschließt, so muss das Einschraubelement 12 beim Einführen des Spreizelements zwangsweise von der Ausgangsstellung um die Schwenkachse S in eine ausgeschwenkte Haltestellung verschwenkt werden. Anders ausgedrückt, vergrößert sich ein zwischen der Längsachse L und der Ebene E eingeschlossener Winkel α, wodurch sich ebenfalls die für den Durchtritt des Spreizelements durch die Durchgangsöffnung 14 zur Verfügung stehende projizierte Fläche vergrößert.

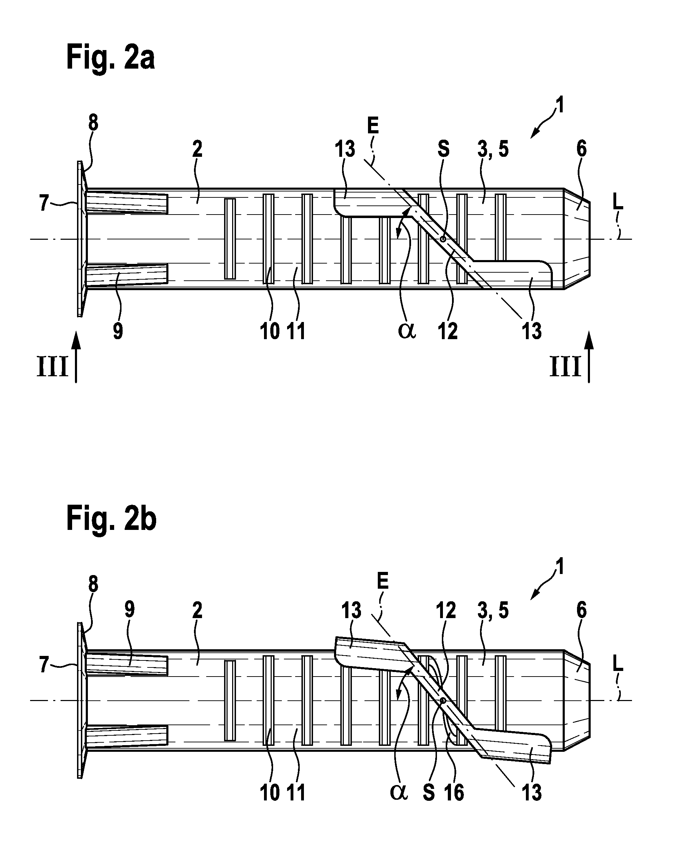

Durch das Verschwenken des Einschraubelements 12 werden die am Einschraubelement 12 einstückig angeordneten und mit dem Einschraubelement 12 fest verbundenen Halteelemente 13 in radialer Richtung von der Längsachse L des Dübels 1 weg bewegt, so dass sie in der Haltestellung in radialer Richtung über den Dübelschaft 2 überstehen, wie dies in der Figur 2b dargestellt ist. Durch das Verschwenken des Einschraubelements 12 wird Material des Dübelschafts 2 nach außen gepresst, wodurch Aufwölbungen 16 entstehen, die in einem Bohrloch eine zusätzliche Haltekraft erzeugen. Alternativ können im Bereich des Einschraubelements 12 am Dübelschaft 2 Freiflächen vorgesehen werden, was das Verschwenken erleichtert. In der Haltestellung werden die Halteelemente 13 somit gegen die Wand eines Bohrlochs gepresst, in das der Dübel 1 vor dem Verspreizen eingeführt worden ist. Wurde das Bohrloch in einen Hohlbaustoff eingebracht, so können die Halteelemente 13 Stege, wie sie beispielsweise in Hochlochziegeln vorkommen, formschlüssig hintergreifen. Die ausgeschwenkten Halteelemente 13 erzeugen somit im Bohrloch eine zusätzliche Haltekraft. Um den Dübel 1 besser in ein Bohrloch einführen zu können, liegen die Halteelemente 13 in der Ausgangsstellung am Dübelschaft 2 an, so dass sie im wesentlichen in radialer Richtung nicht über den Dübelschaft 2 überstehen, was die Figur 2a zeigt.

### Bezugszeichenliste

### Dübel

- 1: Dübel
- 2: Dübelschaft
- 3: Spreizbereich
- 4: schlitzförmige Öffnung
- 5: Spreizschenkel
- 6: vorderes Ende des Dübels 1
- 7: hinteres Ende des Dübels 1
- 8: Bund
- 9: Verdrehsicherungselement
- 10: Nut
- 11: Rippe
- 12: Einschraubelement
- 13: Halteelement
- 14: Durchgangsöffnung
- 15: Verbindungssteg
- 16: Aufwölbung
- L: Längsachse des Dübels
- S: Schwenkachse
- E: Ebene, in der die Durchgangsöffnung 13 liegt
- α: zwischen der Ebene E und der Längsachse L eingeschlossener Winkel

## Patentansprüche

1. Dübel (1) mit einem entlang seiner Längsachse (L) gestreckten hülsenförmigen Dübelschaft (2) aus Kunststoff,
- wobei der Dübelschaft (2) einen Spreizbereich (3) aufweist, der mittels eines Spreizelements spreizbar ist,
- wobei am Dübelschaft (2) ein Einschraubelement (12) angeordnet ist, das eine Durchgangsöffnung (14) aufweist, durch die das Spreizelement einführbar ist,
- wobei das Einschraubelement (12) zur Aufnahme des Spreizelements schwenkbar ist, derart, dass beim Einführen des Spreizelements das Einschraubelement (12) von einer Ausgangsstellung um eine im wesentlichen orthogonal zu Längsachse (L) des Dübels (1) stehende Schwenkachse (S) in eine ausgeschwenkte Haltestellung schwenkbar ist,
**dadurch gekennzeichnet,**
- **dass** am Einschraubelement (12) ein Halteelement (13) angeordnet ist, derart,
- **dass** das Halteelement (13) in der Haltestellung in radialer Richtung über den Dübelschaft (2) übersteht.

2. Dübel nach Anspruch 1, **dadurch gekennzeichnet,**
**dass** das Halteelement (13) in der Ausgangsstellung am Dübelschaft (2) anliegt.

3. Dübel nach Anspruch 1 oder 2, **dadurch gekennzeichnet,**
**dass** das Halteelement (13) in der Ausgangsstellung im wesentlichen in radialer Richtung nicht über den Dübelschaft (2) übersteht.

4. Dübel nach einem der Ansprüche 1 bis 3, **dadurch gekennzeichnet,**
**dass** das Einschraubelement (12) und das Halteelement (13) aus Metall sind.

5. Dübel nach einem der Ansprüche 1 bis 3, **dadurch gekennzeichnet,**
**dass** das Einschraubelement (12) und das Halteelement (13) aus Kunststoff sind.

6. Dübel nach einem der Ansprüche 1 bis 5, **dadurch gekennzeichnet,**
**dass** das Einschraubelement (12) und das Halteelement (13) einstückig sind.

7. Dübel nach einem der Ansprüche 1 bis 6, **dadurch gekennzeichnet,**
**dass** das Einschraubelement (12) ringförmig ist und den Dübelschaft (2) im wesentlichen umfasst.

8. Dübel nach einem der Ansprüche 1 bis 7, **dadurch gekennzeichnet,**
**dass** das Einschraubelement (12) symmetrisch aufgebaut ist.

## Claims

1. Fixing plug (1) having a sleeve-like fixing plug shank (2) made of plastics material extending along the longitudinal axis (L) of the fixing plug,
- wherein the fixing plug shank (2) has an expansion zone (3) which is arranged to be expanded by means of an expander element,
- wherein on the fixing plug shank (2) there is arranged a screw-receiving element (12) which has a through-opening (14) through which the expander element can be introduced,
- wherein for receiving the expander element the screw-receiving element (12) is pivotable in such a way that, on introduction of the expander element, the screw-receiving element (12) is pivotable from a starting position about a pivot axis (S) substantially orthogonal with respect to the longitudinal axis (L) of the fixing plug (1) into a pivoted-out holding position,
**characterised in that**
- a holding element (13) is arranged on the screw-receiving element (12) in such a way
- that the holding element (13), when in the holding position, protrudes beyond the fixing plug shank (2) in the radial direction.

2. Fixing plug according to claim 1, **characterised in that**
in the starting position the holding element (13) rests against the fixing plug shank (2).

3. Fixing plug according to claim 1 or 2, **characterised in that**
in the starting position the holding element (13) does not protrude appreciably beyond the fixing plug shank (2) in the radial direction.

4. Fixing plug according to any one of claims 1 to 3, **characterised in that**
the screw-receiving element (12) and the holding element (13) are made of metal.

5. Fixing plug according to any one of claims 1 to 3, **characterised in that**
the screw-receiving element (12) and the holding element (13) are made of plastics material.

6. Fixing plug according to any one of claims 1 to 5, **characterised in that**
the screw-receiving element (12) and the holding element (13) are in one piece.

7. Fixing plug according to any one of claims 1 to 6, **characterised in that**
the screw-receiving element (12) is ring-shaped and substantially surrounds the fixing plug shank (2).

8. Fixing plug according to any one of claims 1 to 7, **characterised in that**
the screw-receiving element (12) is of symmetrical construction.

## Revendications

1. Cheville (1), avec un corps de cheville (2) en forme de douille en matière plastique allongée le long de son axe longitudinal (L),
- sachant que le corps de cheville (2) présente une zone d'expansion (3) qui peut être élargie au moyen d'un élément d'expansion,
- sachant qu'un élément de vissage (12), qui présente une ouverture de passage (14) par laquelle peut être introduit l'élément d'expansion, est disposé sur le corps de cheville (2),
- sachant que l'élément de vissage (12) destiné à recevoir l'élément d'expansion peut être pivoté de telle sorte que, lors de l'introduction de l'élément d'expansion, l'élément de vissage (12) peut, à partir d'une position initiale, être pivoté autour d'un axe de pivotement (S) sensiblement orthogonal l'axe longitudinal (L) de la cheville (1) dans une position de maintien pivotée vers l'extérieur,
**caractérisée en ce qu'**un élément de maintien (13) est disposé sur l'élément de vissage (12) de telle sorte que, dans la position de maintien, l'élément de maintien (13) dépasse du corps de cheville (2) en direction radiale.

2. Cheville selon la revendication 1, **caractérisée en ce que**, dans la position initiale, l'élément de maintien (13) s'applique contre le corps de cheville (2).

3. Cheville selon la revendication 1 ou 2, **caractérisée en ce que**, dans la position initiale, l'élément de maintien (13) ne dépasse sensiblement pas du corps de cheville (2) en direction radiale.

4. Cheville selon l'une des revendications 1 à 3, **caractérisée en ce que** l'élément de vissage (12) et l'élément de maintien (13) sont en métal.

5. Cheville selon l'une des revendications 1 à 3, **caractérisée en ce que** l'élément de vissage (12) et l'élément, de maintien (13) sont en matière plastique.

6. Cheville selon l'une des revendications 1 à 5, **caractérisée en ce que** l'élément de vissage (12) et l'élément de maintien (13) sont d'un seul tenant.

7. Cheville selon l'une des revendications 1 à 6, **caractérisée en ce que** l'élément de vissage (12) est de forme annulaire et entoure pour l'essentiel le corps de cheville (2).

8. Cheville selon l'une des revendications 1 à 7, **caractérisée en ce que** l'élément de vissage (12) est réalisé symétrique.
